# EUROPÄISCHE PATENTANMELDUNG

(11) **EP 0 811 422 A1**
(43) Veröffentlichungstag der Anmeldung: **10.12.1997**
(21) Anmeldenummer: 97108208.6
(22) Anmeldetag: 21.05.1997
(51) Int. Cl.: B01F 5/04, B01F 15/02, B01F 3/12, B01F 15/04

(54) **Verfahren und Vorrichtung zum kontaminationsfreien Dosieren und Fördern von zu dispergierenden bzw. zu lösenden Feststoffpulvern**

(30) Priorität: 03.06.1996 DE 19622191
(71) Anmelder: BAYER AG, 51368 Leverkusen (DE)
(72) Erfinder: Wangermann, Klaus, Dr., 47800 Krefeld (DE); Viets, Alan, 51377 Leverkusen (DE); Klinksiek, Bernd, 51429 Bergisch Gladbach (DE)

(57) **Zusammenfassung**

Es wird ein Verfahren zum kontaminationsfreien Dosieren und Fördern von zu dispergierenden bzw. zu lösenden Feststoffpulvern aus einem Feststoffvorratsbehälter zu einem Dispergier- bzw. Lösetank beschrieben, wobei der Feststoffvorratsbehälter einen Auslauftrichter aufweist, in dessen Achse ein sich nach unten erweiternder Kegel angeordnet ist, der in Verschlußstellung mit seiner Basiskante auf der Trichterinnenwand aufliegt und in Durchlaßstellung unter Freilassung eines Ringspaltes gegen die Trichterwand angehoben ist, das dadurch gekennzeichnet ist, daß das Feststoffpulver in Durchlaßstellung des Kegels frei fließend einer mit dem Dispergier- bzw. Lösungsmittel betriebenen Flüssigkeitsstrahlpumpe zugeführt, in den Flüssigkeitsstrahl dispergiert und von diesem in den Dispergier- bzw. Lösetank gefördert wird, wobei anhand einer Eichkurve die Dosierung der Feststoffmenge durch Steuerung der Zeit, in der sich der Kegel in Durchlaßstellung befindet, erfolgt, und der Dispergier- bzw. Lösetank entsprechend dem gewünschten Verdünnungsgrad mit dem Dispergier- bzw. Lösungsmittel aufgefüllt wird.

## Beschreibung

Ein in der Technik häufig anzutreffendes Problem ist die Dosierung und Förderung von staubenden bzw. gesundheitlich schädlichen Feststoffpulvern, die anschließend in einer Flüssigkeit gelöst bzw. dispergiert werden sollen. Beispielsweise müssen feste pulverförmige Pflanzenschutzmittel, die anschließend auf dem Feld ausgebracht werden sollen, vorher in einem Spritztank dispergiert oder gelöst werden.

Der nachfolgend dargestellte erfindungsgemäße Vorschlag ist insbesondere auf die Erfordernisse der Landwirtschaft abgestellt: Geringe Konzentration des Feststoffs im Dispergier- bzw. Lösungsmittel von unterhalb 10 Gew.-%; geringe Dosiermenge je Dosiervorgang, typischerweise wenige kg; robuste, raumsparende Konstruktion ohne drehende Teile mit Ausnahme einer Flüssigkeitspumpe, insbesondere Wasserpumpe; und trockene Pulverdosierung, so daß ein Verkleben bzw. Agglomerieren von bei dem jeweiligen Dosiervorgang nicht gefördertem Feststoffpulver sicher vermieden wird. Aufgrund der robusten und unkomplizierten Bauweise ist die Erfindung insbesondere zum mobilen Einsatz am Feldrand geeignet, um den Spritztank, aus dem das Pflanzenschutzmittel auf das Feld ausgebracht wird, jeweils nach Entleerung wieder zu befüllen.

Jedoch ist die Erfindung nicht auf das Gebiet der Landwirtschaft beschränkt. Sie kann vielmehr auch auf anderen Gebieten der Technik vorteilhaft eingesetzt werden.

Gegenstand der vorliegenden Erfindung ist ein Verfahren zum kontaminationsfreien Dosieren und Fördern von zu dispergierenden bzw. zu lösenden Feststoffpulvern aus einem Feststoffvorratsbehälter zu einem Dispergier- bzw. Lösetank, das dadurch gekennzeichnet ist, daß der Feststoffvorratsbehälter einen Auslauftrichter aufweist, in dessen Achse ein sich nach unten erweiternder Kegel angeordnet ist, der in Verschlußstellung mit seiner Basiskante auf der Trichterinnenwand aufliegt und in Durchlaßstellung unter Freilassung eines Ringspaltes gegen die Trichterwand angehoben ist, wobei das Feststoffpulver in Durchlaßstellung des Kegels frei fließend einer mit dem Dispergier- und Lösungsmittel betriebenen Flüssigkeitsstrahlpumpe zugeführt, in den Flüssigkeitsstrahl dispergiert und von diesem in den Dispergier- bzw. Lösetank gefördert wird, wobei anhand einer Eichkurve die Dosierung der Feststoffmenge durch Steuerung der Zeit, in der sich der Kegel in Durchlaßstellung befindet, erfolgt und der Dispergier- bzw. Lösetank entsprechend dem gewünschten Verdünnungsgrad mit dem Dispergier- bzw. Lösungsmittel aufgefüllt wird.

Obwohl Feststoffvorratsbehälter mit Auslauftrichter und in der Regel vibrierendem Verschlußkegel an sich bekannt sind, war nicht zu erwarten, daß das Feststoffpulver bei Durchlaßstellung des Kegels in zeitlich konstantem Strom durch den Ringspalt rieselt und daß daher nach entsprechender Eichung die ausfließende Feststoffmenge über die Öffnungszeit des Kegels gesteuert werden kann. Es wurde gefunden, daß bei mehrfacher Dosierung jeweils über wenige Minuten die durch den Ringspalt hindurchgetretenen Feststoffmengen im Bereich weniger Prozente der jeweiligen Öffnungszeit proportional waren. Offenbar wird die Dosiergenauigkeit des erfindungsgemäßen Verfahrens durch eine Wechselwirkung mit dem durch die Flüssigkeitsstrahlpumpe erzeugten Unterdruck im Raum unterhalb des Verschlußkegels bewirkt. Der erzeugte Unterdruck setzt sich aufgrund des nicht gasdichten Abschlusses durch den Kegel in das Feststoffgut oberhalb des Kegels fort und führt dort zu einer Verdichtung, die durch Öffnen des Kegels gebrochen wird, wobei der Feststoff offenbar in einen besonders gut rieselfähigen Zustand versetzt wird.

Ferner wurde gefunden, daß die Flüssigkeitsstrahlpumpe zum gleichmäßigen Abtransport und zur Dispergierung des trocken zugeführten Feststoffes ohne vorherige Anmaischung des Feststoffs geeignet ist, wenn das Massenstromverhältnis von Flüssigkeitsstrahl und Feststoff unterhalb von 30 liegt, bevorzugt im Bereich zwischen 1 und 20, insbesondere bevorzugt im Bereich zwischen 5 und 15.

Nach einer bevorzugten Ausführungsform der Erfindung ist zwischen Auslauftrichter und Strahlpumpe ein Kugelventil vorgesehen, das nach erfolgter Dosierung den Trichter flüssigkeitsdicht gegen die Strahlpumpe abschließt.

Erfindungsgemäß bevorzugt ist ferner quer zur Strahlrichtung des Flüssigkeitsstrahls eine Reinigungsdüse vorgesehen, mittels derer die Strahlpumpe bei geschlossenem Kugelventil von in der Strahlpumpe verbliebenen Feststoffresten durch Zuführung von Dispergier- bzw. Lösungsmittel befreit werden kann.

Zur Gewährleistung der Dosiergenauigkeit soll ferner bevorzugt die freie Ringspaltbreite in Durchlaßstellung des Kegels mindestens das dreifache, insbesondere das fünf- bis zehnfache der Maschenweite eines Siebes betragen, das 90 Gew.-% des Feststoffpulvers durchläßt.

Gegenstand der vorliegenden Erfindung ist auch eine Vorrichtung zum kontaminationsfreien Dosieren und Fördern von zu dispergierenden bzw. zu lösenden Feststoffpulvern aus einem Vorratsbehälter für das Feststoffpulver zu einem Dispergier- bzw. Lösetank, wobei die Vorrichtung einen unterhalb des Vorratsbehälters angeordneten Auslauftrichter für den Feststoff enthält; wobei in dem Auslauftrichter ein in Achsenrichtung beweglicher, sich nach unten erweiternder Kegel angeordnet ist, der in Verschlußstellung mit seiner Basiskante innen auf der Trichterwand aufliegt und in Durchlaßstellung gegen die Trichterwand unter Freigabe eines Auslaßringspaltes angehoben ist, und ferner eine unterhalb des Trichters quer zu dessen Achse angeordnete Flüssigkeitsstrahlpumpe enthält, die in die Verbindungsleitung zu dem Dispergier- bzw. Lösetank fördert.

Dabei besteht die Flüssigkeitsstrahlpumpe aus Treibdüse, Ansaugraum, Mischraum und Diffusor, wobei vorzugsweise der zwischen Treibdüse und Mischraum, d.h. quer durch den Ansaugraum, erzeugte Freistrahl länger ist als der Querschnitt des Trichterauslaufrohres. Vorzugsweise beträgt das Verhältnis der Innendurchmesser von Mischrohr und Treibdüse zwischen 2 und 3. Der Öffnungwinkel des Diffusors kann vorzugsweise 2 bis 5° betragen.

Ferner kann erfindungsgemäß bevorzugt vorgesehen sein, daß in dem Verbindungsrohr zwischen Trichterauslaß und Strahlpumpe achsenparallele Leitbleche vorgesehen sind, die ein rotierendes Fließen des Feststoffes am Trichterauslauf verhindern.

Die Erfindung wird nachfolgend anhand der beigefügten Figuren näher erläutert.
- Fig. 1: zeigt einen Querschnitt durch die erfindungsgemäße Vorrichtung unterhalb des Vorratsbehälters.
- Fig. 2: zeigt einen Schnitt A-A durch die Vorrichtung gemäß Fig. 1 zur Darstellung der Leitbleche.

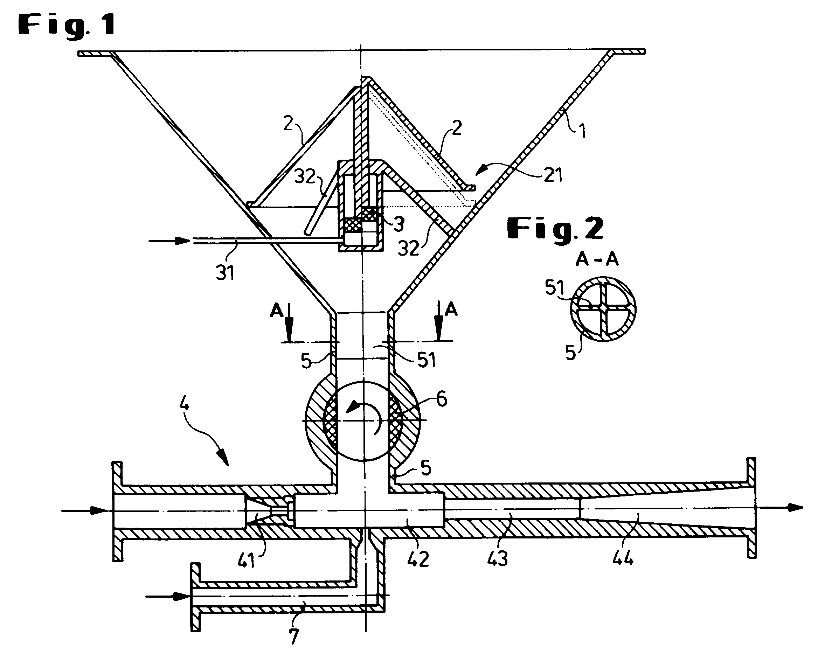

Fig. 1 zeigt den unteren Teil des Auslauftrichters 1 eines Feststoffvorratsbehälters. In dem Trichter 1 ist der Kegel 2 angeordnet, der über eine pneumatische Hubvorrichtung 3, die über Stützen 32 an der Trichterwand befestigt ist, angehoben werden kann. Die linke Seite zeigt den Kegel 2 in Verschlußstellung, die rechte Seite zeigt den Kegel 2 in Durchlaßstellung. Über Leitung 31 wird Druckgas zum Anheben des Kegels 2 zugeführt. Unterhalb des Trichters befindet sich die Flüssigkeitsstrahlpumpe 4, bestehend aus Treibdüse 41, Ansaugraum 42, Mischraum 43 und Diffusor 44. Die durch den Ringspalt 21 in Durchlaßstellung des Kegels 2 hindurchtretenden Feststoffteilchen rieseln durch das Verbindungsrohr 5 in den Ansaugraum 42 der Flüssigkeitsstrahlpumpe 4. Das Verbindungsrohr 5 enthält ferner das Kugelventil 6, das in Durchlaßstellung dargestellt ist. In dem Verbindungsrohr 5 sind ferner Leitbleche 51 vorgesehen, die ein achsenparalleles Fließen der Feststoffteilchen gewährleisten.

Die erfindungsgemäße Dosier- und Fördervorrichtung wird wie folgt betrieben: Zur Einleitung des Dosiervorgangs befinden sich zunächst der Kegel 2 und das Kugelventil 6 in Verschlußstellung. Die Flüssigkeitsstrahlpumpe 4 wird mit Flüssigkeit bei einem Druck von 0,5 bis 6 bar, wobei ein nicht dargestelltes Druckregelventil vorgesehen sein kann, beaufschlagt, bis sich ein stabiler Flüssigkeitsstrahl ausgebildet hat. Danach wird das Kugelventil 6 geöffnet und anschließend der Kegel 2 in Durchlaßstellung gebracht. Entsprechend der zu dosierenden Feststoffmenge wird nach einem Zeitraum von beispielsweise 2 bis 5 Minuten der Kegel 2 in Verschlußstellung gebracht, anschließend das Kugelventil 6 geschlossen und die Reinigungsdüse 7 mit Flüssigkeit beschickt. Nach Reinigung der Flüssigkeitsstrahlpumpe wird die Flüssigkeitszufuhr bis zur Einleitung des nächsten Dosiervorganges unterbrochen. Vorzugsweise ist hinter dem Auslaß der Flüssigkeitsstrahlpumpe ein Rückschlagventil vorgesehen, das ein Zurückströmen der Reinigungsflüssigkeit verhindert.

### Beispiel

Es wird eine Vorrichtung gemäß Fig. 1 eingesetzt. Die Kegelbasis 2 hat eine Umfangslänge von 150 mm. In Durchlaßstellung ist der Kegel 2 um 10 mm angehoben, so daß ein Spalt einer Breite von 6 mm frei bleibt. Der Durchmesser des Verbindungsrohres 5 beträgt 25 mm. Die Treibdüse hat einen Durchmesser von 7,5 mm, der Ansaugraum eine Länge von 50 mm, das Mischrohr einen Durchmesser von 17 mm und eine Lange von 40 mm. Es wird ein Pflanzenschutzmittelgranulat mit einer Korngröße kleiner 2 mm eingesetzt. Die Flüssigkeitsstrahlpumpe 4 wird mit Wasser bei einem Druck von 1 bar beschickt, so daß der Flüssigkeitsstrahl 35 l/min durchsetzt. Durch wiederholte Eichung wurde festgestellt, daß 4,2 kg Pflanzenschutzmittelgranulat pro Minute gefördert wurden, wobei die Abweichung zwischen den einzelnen Eichversuchen weniger als 2 % betrug.

## Patentansprüche

1. Verfahren zum kontaminationsfreien Dosieren und Fördern von zu dispergierenden bzw. zu lösenden Feststoffpulvern aus einem Feststoffvorratsbehälter zu einem Dispergier- bzw. Lösetank, wobei der Feststoffvorratsbehälter einen Auslauftrichter aufweist, in dessen Achse ein sich nach unten erweiternder Kegel angeordnet ist, der in Verschlußstellung mit seiner Basiskante auf der Trichterinnenwand aufliegt und in Durchlaßstellung unter Freilassung eines Ringspaltes gegen die Trichterwand angehoben ist, dadurch gekennzeichnet, daß das Feststoffpulver in Durchlaßstellung des Kegels frei fließend einer mit dem Dispergier- bzw. Lösungsmittel betriebenen Flüssigkeitsstrahlpumpe zugeführt, in den Flüssigkeitsstrahl dispergiert und von diesem in den Dispergier- bzw. Lösetank gefördert wird, wobei anhand einer Eichkurve die Dosierung der Feststoffmenge durch Steuerung der Zeit, in der sich der Kegel in Durchlaßstellung befindet, erfolgt, und der Dispergier- bzw. Lösetank entsprechend dem gewünschten Verdünnungsgrad mit dem Dispergier- bzw. Lösungsmittel aufgefüllt wird.

2. Verfahren nach Anspruch 1, dadurch gekennzeichnet, daß nach Abschluß der Dosierung ein zwischen Auslauftrichter und Strahlpumpe angeordnetes Kugelventil flüssigkeitsdicht geschlossen, der Flüssigkeitsstrahl unterbrochen und die Strahlpumpe durch Eindüsen von zusätzlichem Dispergier- bzw. Lösungsmittel quer zur Strahlrichtung gespült wird.

3. Verfahren nach Anspruch 1 oder 2, dadurch gekennzeichnet, daß das Massenstromverhältnis von Flüssigkeitsstrahl und Feststoff zwischen 1 und 20 liegt.

4. Verfahren nach einem der Ansprüche 1 bis 3, dadurch gekennzeichnet, daß die freie Ringspaltbreite in Durchlaßstellung des Kegels mindestens das dreifache der Maschenweite eines Siebes, das 90 Gew.-% des Feststoffpulvers durchläßt, beträgt.

5. Vorrichtung zum kontaminationsfreien Dosieren und Fördern von zu dispergierenden bzw. zu lösenden Feststoffpulvern aus einem Vorratsbehälter für das Feststoffpulver zu einem Dispergier- bzw. Lösetank, enthaltend einen unterhalb des Vorratsbehälters angeordneten Auslaufrichter für den Feststoff, wobei in dem Auslauftrichter ein in Achsenrichtung beweglicher, sich nach unten erweiternder Kegel angeordnet ist, der in Verschlußstellung mit seiner Basiskante innen auf der Trichterwand aufliegt und in Durchlaßstellung gegen die Trichterwand unter Freigabe eines Auslaßringspaltes angehoben ist, sowie eine unterhalb des Trichters quer zu dessen Achse angeordnete Flüssigkeitsstrahlpumpe, die in die Verbindungsleitung zu dem Dispergier- bzw. Lösetank fördert.

6. Vorrichtung nach Anspruch 5, wobei zwischen Auslauftrichter und Strahlpumpe ein Kugelventil angeordnet ist.

7. Vorrichtung nach Anspruch 5 oder 6, wobei die Strahlpumpe quer zur Richtung des Flüssigkeitsstrahls eine Düse zur Einleitung von Spülflüssigkeit aufweist.

8. Vorrichtung nach einem der Ansprüche 5 bis 7, wobei die Flüssigkeitsstrahlpumpe aus Treibdüse, Ansaugraum, Mischrohr und Diffusor besteht und der zwischen Treibdüse und Mischrohr, d.h. quer durch den Ansaugraum, erzeugte Freistrahl länger ist als der Querschnitt des Trichterauslaufrohres.

9. Vorrichtung nach Anspruch 8, wobei das Verhältnis der Innendurchmesser von Mischrohr und Treibdüse 2 bis 3 beträgt.

10. Vorrichtung nach Anspruch 8 oder 9, wobei der Öffnungswinkel des Diffusors 2 bis 5° beträgt.
